# EUROPÄISCHE PATENTSCHRIFT

(11) **EP 1 634 668 B1**
(45) Veröffentlichungstag und Bekanntmachung des Hinweises auf die Patenterteilung: **28.05.2008**
(21) Anmeldenummer: 04021362.1
(22) Anmeldetag: 08.09.2004
(51) Int. Cl.: B23H 7/10

(54) **Drahtschneideeinrichtung, Drahtlaufsystem sowie Verfahren zum Zerteilen einer Drahtelektrode in einer Funkenerosionsvorrichtung**
Wire cutting device, wire feeding system and method for cutting a wire electrode in a wire cutting electric discharge machine.
Dispositif de découpage d'un fil, système de guidage de fil, et méthode de découpage d'un fil dans une machine d'usinage par électroérosion par fil.

(43) Veröffentlichungstag der Anmeldung: 15.03.2006
(73) Patentinhaber: AGIE SA, 6616 Losone (CH)
(72) Erfinder: Wehrli, Peter, 6612 Ascona (CH)
(74) Vertreter: Niederkofler, Oswald

(56) Entgegenhaltungen:
- US-A- 5 523 538
- PATENT ABSTRACTS OF JAPAN Bd. 1999, Nr. 13, 30. November 1999 (1999-11-30) & JP 11 216619 A (OKUMA CORP), 10. August 1999 (1999-08-10)

## Beschreibung

Die Erfindung betrifft allgemein das Gebiet der funkenerosiven Werkstücksbearbeitung, d.h. Werkzeugmaschinen, bei welchen eine elektrische Entladung zwischen einer beispielsweise draht- oder bandförmigen Werkzeugelektrode und einem Werkstück einen Materialabtrag am Werkstück bewirkt. Insbesondere betrifft die Erfindung ein Drahtlaufsystem zum Transportieren der draht- oder bandförmigen Elektrode durch die Funkenerosionsvorrichtung und eine Drahtschneideeinrichtung zum Zerteilen der Drahtelektrode in einem Entsorgungsbereich nach dem Arbeitsbereich der Funkenerosionsvorrichtung. Die Erfindung betrifft weiterhin ein Verfahren zum Schneiden einer derartigen Drahtelektrode.

Eine solche Drahtschneideeinrichtung und ein solches Verfahren zum Zerteilen einer Drahtelekrtode sind aus JP11216619 bekannt. Dieses Dokument zeigt die Merkmale des Oberbegriffs der Ansprüche 1 und 18.

Bei der funkenerosiven Werkstücksbearbeitung erfolgen unzählige einzelne, räumlich und zeitlich voneinander getrennte, nicht stationäre elektrische Entladungen zwischen einer Werkzeugelektrode und einem Werkstück innerhalb eines dielektrischen Fluids. Der Abtrag beruht auf der extremen lokalen Erwärmung am Orte der Funkenentladung, bei welcher der Werkstoff verdampft. Funkenerosionsvorrichtungen der eingangs genannten Art nutzen die abtragende Wirkung der Funkenerosion. Während der Bearbeitung unterliegt die Werkzeugelektrode aufgrund der Funkenentladungen einem gewissen Verschleiss. Aus diesem Grunde wird die Werkzeugelektrode beispielsweise im Falle einer Drahterodiermaschine als durchlaufende Drahtelektrode vorgesehen, die während der Werkstückbearbeitung den Arbeitsbereich der Funkenerosionsvorrichtung durchläuft und so laufend erneuert wird.

Dazu ist üblicherweise, wie z. B. aus der Druckschrift DE 196 07 705 A1 bekannt, ein Drahtlaufsystem vorgesehen, das die Drahtelektrode von einer Versorgungsrolle abspult, durch den Arbeitsbereich führt und in einen Entsorgungsbereich transportiert. Im Entsorgungsbereich wird die Drahtelektrode zur Platz sparenden Entsorgung üblicherweise in kleine Stücke von der Länge von einigen Zentimetern zerschnitten.

Aus der Druckschrift EP 0 281 51 1 B1 ist eine Drahtschneideeinrichtung bekannt, die eine rotierende Schneidtrommel und eine gegenläufig rotierende elastische Gegentrommel mit einer Kautschukbeschichtung aufweist. Die Schneidtrommel weist parallel zur Drehachse angeordnete Schneidkanten auf, die bei einer Rotation der Schneidtrommel gegen die Oberflächen der Gegentrommel gedrückt werden. Die Drahtelektrode wird zwischen der Schneidtrommel und der Gegentrommel hindurchgeführt und dadurch mit Hilfe der Schneidkante geschnitten.

Eine solche Drahtschneideeinrichtung hat u. a. den Nachteil, dass die Schneiden der Schneidtrommel aber auch die stark abrasive Drahtelektrode die Kautschukbeschichtung der Gegentrommel stark beanspruchen. Die elastische Beschichtung degradiert somit relativ schnell.

Weiterhin ist es nicht möglich, die gezeigte Drahtschneideeinrichtung zu deaktivieren, sodass die Drahtelektrode unzerschnitten in einen Entsorgungsbehälter eingebracht werden kann. Dies ist vor allem bei Drahtelektroden mit einem Durchmesser von 0.1 mm oder kleiner sinnvoll, weil diese im Entsorgungsbehälter verhältnismässig wenig Platz beanspruchen, sodass ein Zerkleinern zur Platz sparenden Entsorgung nicht notwendig ist. Diese feinen Drahtelektroden bestehen üblicherweise aus Wolfram, Molybdän oder Eisen, also Werkstoffen die gegenüber den klassischen Drahtelektrodenwerkstoffen, Kupfer oder Kupfer-Zink-Legierungen höhere Festigkeitswerte aufweisen. Die hohe Scherfestigkeit solcher Drähte verursacht beim Zerkleinern zusätzlichen Verschleiss.

Aus der Druckschrift EP 1 153 688 A1 ist eine Drahtschneideeinrichtung für eine Funkenerosionsvorrichtung bekannt, bei der die Drahtelektrode durch ein Führungsrohr zu einem Schneidbereich geführt wird, wobei ein Ende des Führungsrohrs eine Schneidkante bildet. Eine rotierende Schneidtrommel mit im Wesentlichen parallel zur Rotationsachse angeordneten Schneidkanten ist so an dem Ende des Führungsrohrs angeordnet, dass sich die Schneidkante der Schneidtrommel quer über das Ende des Führungsrohrs hinwegbewegt und die dadurch vorgeschobene Drahtelektrode greift und zerteilt.

Aus JP 11 21 66 19 ist eine Drahtschneideeinrichtung für eine Funkenerosionsvorrichtung bekannt, bei der die Drahtelektrode in einem Schneidbereich an einer Schneidfläche eines Schneidelements durch eine Führungvorrichtung entlanggeführt wird. Dadurch wird der Schneidpunkt auf der Schneidfläche des Schneidelements an dem die Drahtelektrode geschnitten wird bei jedem Schneidvorgang verändert und ein punktueller Verschleiß des Schneidelements verhindert.

Auch bei den beiden vorherigen Drahtschneideeinrichtungen ist es bei kleinen Drahtdurchmessern der Drahtelektrode nicht möglich, die Drahtschneideeinrichtung in einfacher Weise zu deaktivieren, sodass die Drahtelektrode unzerkleinert in den Entsorgungsbereich geführt werden kann.

Es ist daher Aufgabe der vorliegenden Erfindung, eine verbesserte Drahtschneideeinrichtung für ein Drahtlaufsystem in einer Funkenerosionsvorrichtung zur Verfügung zu stellen. Es ist weiterhin Aufgabe der vorliegenden Erfindung ein verbessertes Verfahren zum Schneiden einer Drahtelektrode in einer Funkenerosionsvorrichtung zur Verfügung stellen, mit dem es möglich ist, die Drahtelektroden verschiedenen Durchmessers, verschiedenen Querschnitts und verschiedenen Werkstoffs zuverlässig zu zerteilen.

Diese Aufgabe wird durch eine Drahtschneideeinrichtung nach Anspruch 1, das Drahtlaufsystem nach Anspruch 17, sowie das Verfahren zum Zerteilen einer Drahtelektrode nach Anspruch 18 gelöst. Weitere vorteilhafte - aber lediglich optionale - Ausgestaltungen der Erfindung ergeben sich aus den abhängigen Ansprüchen, der nachfolgenden Beschreibung sowie den Zeichnungen.

Gemäss einem ersten Aspekt der Erfindung ist eine Drahtschneideeinrichtung für eine Funkenerosionsvorrichtung vorgesehen. Die Drahtschneideeinrichtung weist eine Drahtlaufeinrichtung auf, die eine Drahtelektrode entlang einer Zuführungsrichtung in eine Schneidzone der Funkenerosionsvorrichtung bewegt. Mit Hilfe einer Ablenkeinheit kann in der Schneidzone die in Zuführungsrichtung laufende Drahtelektrode aus der Zuführungsrichtung, beispielsweise quer dazu, d.h. mit mindestens einer Bewegungskomponente senkrecht zur Zuführungsrichtung, in einen Schneidbereich abgelenkt werden, wobei in dem Schneidbereich mindestens eine Schneidkante auf die Drahtelektrode einwirkt, um diese zu schneiden.

Die Drahtschneideeinrichtung der vorliegenden Erfindung weist demnach eine Ablenkeinheit auf, in der die Drahtelektrode aus der Zuführungsrichtung seitlich in die Schneidzone bewegt werden kann und dort geschnitten wird. Da der Schneidbereich dann gegenüber der Zuführungsrichtung versetzt angeordnet ist, ist die Bewegung der Drahtelektrode weitestgehend nicht von Schneidelementen im Schneidbereich behindert. Die Ablenkeinheit wirkt nicht auf die Bewegung der Drahtelektrode entlang der Zuführungsrichtung sondern lediglich in einem dazu versetzen Bereich. So lässt sich mit Hilfe der Ablenkeinheit sowohl die Häufigkeit, in der die Drahtelektrode in dem Schneidbereich geschnitten wird, einstellen und steuern, und es ist sogar möglich, die Drahtschneideeinrichtung gänzlich zu deaktivieren, indem die Ablenkeinheit deaktiviert wird. Dann wird die Drahtelektrode im Wesentlichen nicht mehr quer zur Zuführungsrichtung abgelenkt und nicht in den Schneidbereich bewegt. Somit wird eine Drahtschneideeinrichtung bereitgestellt, die insbesondere Drahtelektroden verschiedenen Querschnitts und verschiedener Dicke in zuverlässiger Weise schneidet, die einem geringen Verschleiss unterliegt und die insbesondere bei kleinen Drahtdurchmessern in einfacher Weise deaktiviert werden kann.

Gemäss einer Ausführungsform der Erfindung kann vorgesehen sein, dass die Ablenkeinheit ausgestaltet ist, um die in Zuführungsrichtung laufende Drahtelektrode jeweils nach einem bestimmten Vorschub der Drahtelektrode in den Schneibereich abzulenken und zu schneiden. Auf diese Weise kann die Drahtelektrode in Drahtstücke einstellbarer Länge zerschnitten werden.

Es kann vorgesehen sein, dass die Drahtschneideeinrichtung ein um eine Rotationsachse rotierendes erstes Schneidelement, deren Umfangsrand zumindest teilweise als erste Schneidkante ausgebildet ist, und ein zweites Schneidelement mit einer zweiten Schneidkante aufweist, um den Schneidbereich zu bilden. Die Drahtlaufeinrichtung führt die Drahtelektrode in die Schneidzone, wobei die Zuführungsrichtung quer zu den Schneidkanten und zumindest mit einer Richtungskomponente parallel zur Rotationsachse des ersten Schneidelements verläuft. Dadurch können auf einfache Weise Mittel zum Zerteilen der Drahtelektrode in dem Schneidbereich zur Verfügung gestellt werden.

Vorzugsweise können die erste Schneidkante des Schneidelements und die zweite Schneidkante im Schneidbereich einen spitzen Winkel bilden. Die Schneidelemente können an ihren Umfangsrändern eine raue Oberfläche aufweisen. Diese Massnahmen erleichtern Mitnahme der Drahtelektrode in den Schneidbereich.

Gemäss einer weiteren Ausführungsform der Erfindung kann das zweite Schneidelement rotierbar sein und die zweite Schneidkante an einem Umfangsrand des zweiten Schneidelements ausgebildet sein. Insbesondere ist es vorteilhaft, wenn das zweite Schneidelement so gestaltet ist, um in gegenläufiger Drehrichtung zum ersten Schneidelement zu rotieren. Dies kann gemäss einer Ausführungsform realisiert sein, indem das zweite Schneidelement so mit dem ersten Schneidelement gekoppelt ist, dass sich das zweite Schneidelement aufgrund der Drehung des ersten Schneidelements dreht. Auf diese Weise kann eine mechanisch einfach zu realisierende verschleissarme Schneideinrichtung vorgesehen werden. Insbesondere kann die Koppelung der beiden Schneidelemente dadurch realisiert werden, indem ein Abschnitt des ersten Schneidelements an einem Abschnitt des zweiten Schneidelements anliegt, sodass bei einer Drehung des ersten Schneidelements das zweite Schneidelement durch Kraft und/oder Formschluss mitgenommen wird. Insbesondere bei einem Kraftschluss liegen die beiden Schneidelemente unmittelbar aneinander, sodass ein Umknicken oder Einklemmen der Drahtelektrode zwischen den beiden Schneidelementen unmöglich ist. Dabei ist es sowohl möglich, das zweite Schneidelement bezüglich der Zuführungsrichtung hinter dem ersten Schneidelement als auch das zweite Schneidelement bezüglich der Zuführungsrichtung vor dem ersten Schneidelement anzuordnen.

Gemäss einer Ausführungsform der Erfindung kann die Ablenkeinheit ein Anschlagselement aufweisen, das so bewegbar ist, dass die Drahtelektrode mit wenigstens einer Bewegungskomponente quer zur Zuführungsrichtung in den Schneidbereich abgelenkt wird. Insbesondere kann vorgesehen sein, dass die Ablenkeinheit mit dem ersten Schneidelement und/oder dem zweiten Schneidelement gekoppelt ist, sodass die in Zuführungsrichtung bewegliche Drahtelektrode zyklisch von dem Anschlagelement erfasst wird und aus der Zuführungsrichtung in den Schneidbereich bewegt wird. Dies hat den Vorteil, dass keine getrennte Ansteuerung oder Antrieb der Ablenkeinheit notwendig ist, da das Ablenken der Drahtelektrode durch die Rotation des ersten bzw. zweiten Schneidelementes durchgeführt wird.

Dabei werden vorzugsweise die Ablenkeinheit und das erste Schneidelement bzw. die Ablenkeinheit und das zweite Schneidelement als eine Einheit ausgebildet, wobei das Anschlagelement von dem Umfangsrand des ersten und/oder zweiten Schneidelements hervorsteht.

Es können mehrere Anschlagselemente an dem Umfangsrand des ersten bzw. des zweiten Schneidelements vorgesehen sein, wobei die bezüglich einer Rotationsachse des ersten bzw. zweiten Schneidelementes äussersten Enden der Anschlagelemente miteinander mit einem Aussenring verbunden sind, sodass jeweils zwei benachbarte Anschlagelemente, die jeweilige Schneidkante des ersten bzw. zweiten Schneidelements und der Aussenring einen Durchlass bilden, durch den die Drahtelektrode geführt ist. Der Durchlass hat den Vorteil, dass er eine Führung für die Drahtelektrode bildet, sodass die Drahtelektrode nicht aus dem Bereich der Ablenkeinheit, d.h. der Bereich, in dem die Ablenkeinheit die Drahtelektrode ablenkt, herausgelangen kann.

Gemäss einer weiteren Ausführungsform der Erfindung können das erste Schneidelement und das zweite Schneidelement einen Umfangsrand mit einem oder mehreren Vorsprüngen aufweisen, an denen sich die Anschlagskanten befinden, wobei diese Vorsprünge die Ablenkeinheit bilden. Dies stellt eine Möglichkeit dar, die Ablenkeinheit mit dem Schneidelement zu vereinen und damit die Anzahl der Teile in der Drahtschneideeinrichtung zu reduzieren.

Gemäss einer weiteren Ausführungsform der Erfindung ist das zweite Schneidelement feststehend ausgebildet. Dadurch kann die Anzahl der sich bewegenden Teile in der Drahtschneideeinrichtung reduziert werden, wodurch die Zuverlässigkeit erhöht wird.

Gemäss einer weiteren Ausführungsform der Erfindung kann die Ablenkeinheit eine Fluiddüse aufweisen, die so angeordnet ist, dass abhängig von einem Durchströmen mit einem Fluid die Drahtelektrode in den Schneidbereich gelangt. Insbesondere kann bei Aktivierung der Fluiddüse die Drahtelektrode aus der Zuführungsrichtung in den Schneidbereich abgelenkt geführt werden. Die Fluiddüse hat den Vorteil, dass die Ablenkeinheit in einfacher Weise realisiert werden kann und gleichzeitig der Abtransport der Drahtstücke in den Entsorgungsbehälter durch das dorthin fliessende Fluid verbessert wird.

Gemäss einem weiteren Aspekt der vorliegenden Erfindung ist ein Drahtlaufsystem mit einer solchen Drahtschneideeinrichtung und einem Drahtentsorgungsbereich in einer Funkenerosionsvorrichtung vorgesehen.

Gemäss einem weiteren Aspekt der vorliegenden Erfindung ist ein Verfahren zum Zerteilen einer Drahtelektrode in einer Funkenerosionsvorrichtung vorgesehen. Bei dem Verfahren wird die Drahtelektrode entlang einer Zuführungsrichtung in eine Schneidzone der Funkenerosionsvorrichtung bewegt und die in Zuführungsrichtung laufende Drahtelektrode aus der Zuführungsrichtung, beispielsweise quer dazu oder mit mindestens einer Bewegungskomponente senkrecht zur Zuführungsrichtung, in den Schneidbereich mitgenommen, wobei in dem Schneidbereich zumindest eine Schneidkante auf die Drahtelektrode einwirkt, um diese zu zerteilen.

Das erfindungsgemässe Verfahren hat den Vorteil, dass ein Zerteilen der Drahtelektrode dann erfolgt, wenn die Drahtelektrode aus der Zuführungsrichtung abgelenkt wird. Dadurch lässt sich beispielsweise der Schneidvorgang steuern, sodass abhängig von Durchmesser und der Querschnittsfläche der Drahtelektrode die Häufigkeit der Schneidvorgänge eingestellt werden kann, bzw. insbesondere wie es bei einem sehr kleinen Durchmesser der Drahtelektrode vorteilhaft ist, kein Schneidvorgang vorgenommen wird und die Drahtelektrode die Drahtschneideeinrichtung ungehindert durchlaufen kann.

Gemäss einer weiteren Ausführungsform kann die in Zuführungsrichtung laufende Drahtelektrode jeweils nach einem bestimmten Vorschub der Drahtelektrode aus der Zuführungsrichtung abgelenkt werden. Auf diese Weise kann die Dichte der Drahtstücke in dem Entsorgungsbehälter optimiert werden.

Weitere bevorzugte Ausführungsformen der Erfindung werden nachfolgend anhand der beigefügten Zeichnungen näher erläutert. Es zeigen:
Figur 1 einen Ausschnitt eines Drahtlaufsystems mit einer Drahtschneideeinrichtung gemäss einer Ausführungsform der Erfindung;
Figuren 2a, 2b eine Vorderansicht für einen Teilschnitt der Drahtschneideeinrichtung der Ausführungsform nach Figur 1;
Figur 2c eine Detailansicht der Vorderansicht nach Figur 2a;
Figur 2d eine Detailansicht eines Ausschnitts der Drahtschneideeinrichtung der Figur 2b;
Figur 3a eine vergrösserte Darstellung der Drahtschneideeinrichtung der Figur 2a;
Figuren 3b, 3c, 3d eine Draufsicht bevorzugter axialer Anordnungen der Schneidelemente und Drahtschneideeinrichtung gemäss verschiedener Ausführungsformen;
Figur 4 die Darstellung der Schneidelemente einer Drahtschneideeinrichtung gemäss einer weiteren Ausführungsform der Erfindung;
Figur 5 eine weitere Variante einer Anordnung der Schneidelemente in einer weiteren Ausführungsform der Erfindung;
Figur 6a, 6b weitere Ausführungsformen mit alternativen Geometrien der Schneidelemente; und
Figur 7a und 7b eine weitere Ausführungsform der erfindungsgemässen Drahtschneideeinrichtung mit einer Fluiddüse.

Nachfolgend werden die einzelnen Elemente der verschiedenen Ausführungsformen der Erfindung mit Bezugszeichen versehen. Dabei entsprechen gleiche Bezugszeichen gleichen Elementen oder Elementen gleicher oder vergleichbarer Funktion.

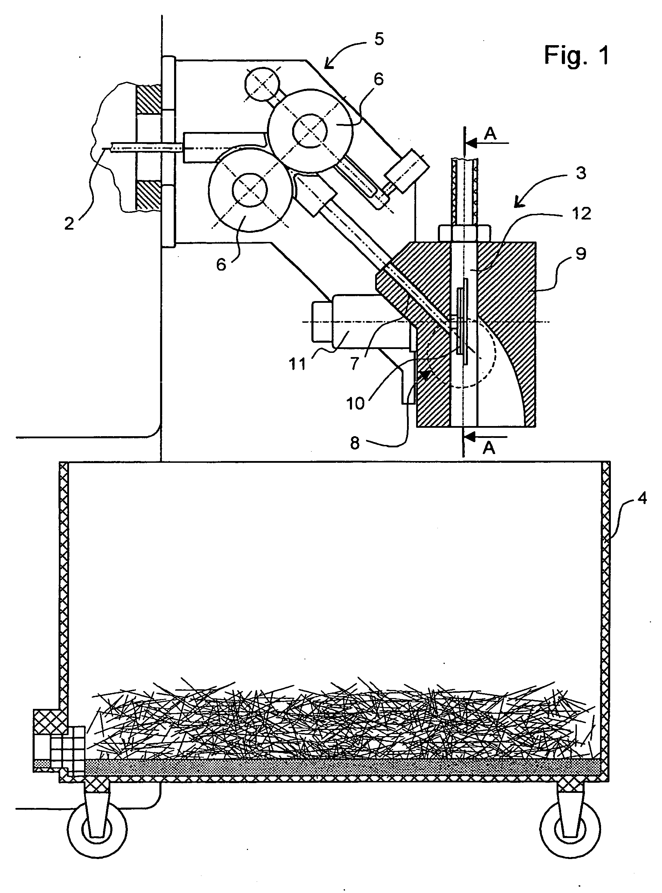

In Figur 1 ist ein Ausschnitt aus einem Drahtlaufsystem 1 einer Funkenerosionsvorrichtung gezeigt. Das Drahtlaufsystem 1 transportiert eine Drahtelektrode 2 durch einen Arbeitsbereich der Funkenerosionsvorrichtung, in dem mit Hilfe der Drahtelektrode 2 Funkenentladungen erzeugt werden, mit denen Material von einem Werkstück abgetragen wird. Dabei unterliegt die Drahtelektrode 2 ebenfalls einem Materialabtrag, sodass die Drahtelektrode 2 bereits während kurzer Zeit im Arbeitsbereich so verschleisst, dass sie für die Werkstücksbearbeitung unbrauchbar wird. Aus diesem Grund wird die Drahtelektrode 2 während des Bearbeitens eines Werkstücks kontinuierlich durch den Arbeitsbereich geführt und anschliessend in einem Entsorgungsbereich entsorgt. In dem Entsorgungsbereich befindet sich eine Drahtschneideeinrichtung 3, die die verbrauchte Drahtelektrode 2 in Drahtstücke zerschneidet und die Drahtstücke in einem Entsorgungsbehälter 4 zur späteren Entsorgung sammelt.

In Figur 1 weist das Drahtlaufsystem 1 eine Drahtabzugeinrichtung 5 auf, die die Drahtelektrode 2 durch den Arbeitsbereich zieht und zur Drahtschneideeinrichtung 3 schiebt. In Laufrichtung der Drahtelektrode 2 hinter der Drahtabzugseinrichtung 5 befindet sich die Drahtschneideeinrichtung 3. Die Drahtelektrode 2 wird in einer bestimmten Zuführungsrichtung in eine Schneidzone 8 der Drahtschneideeinrichtung 3 bewegt. Die Schneidzone 8 befindet sich innerhalb eines Schneidgehäuses 9, in dem sich Schneidelemente 10 befinden, die von einer am Schneidgehäuse 9 angebrachten Antriebseinheit 11 angetrieben sind. Es kann vorgesehen sein, dass der Transport der Drahtelektrode 2 durch den Führungskanal 7 in das Schneidgehäuse 9 der Drahtschneideeinrichtung 3 durch eine Fluidströmung unterstützt wird. Das Schneidgehäuse 9 weist einen Strömungskanal 12 auf, durch den beim Betrieb ein Fluid geleitet wird. Der Strömungskanal 12 verläuft durch die Schneidzone, sodass die geschnittenen Drahtstücke aus der Schneidzone 8 mitgenommen werden, um eine mögliche Stauung der Drahtstücke zu vermeiden.

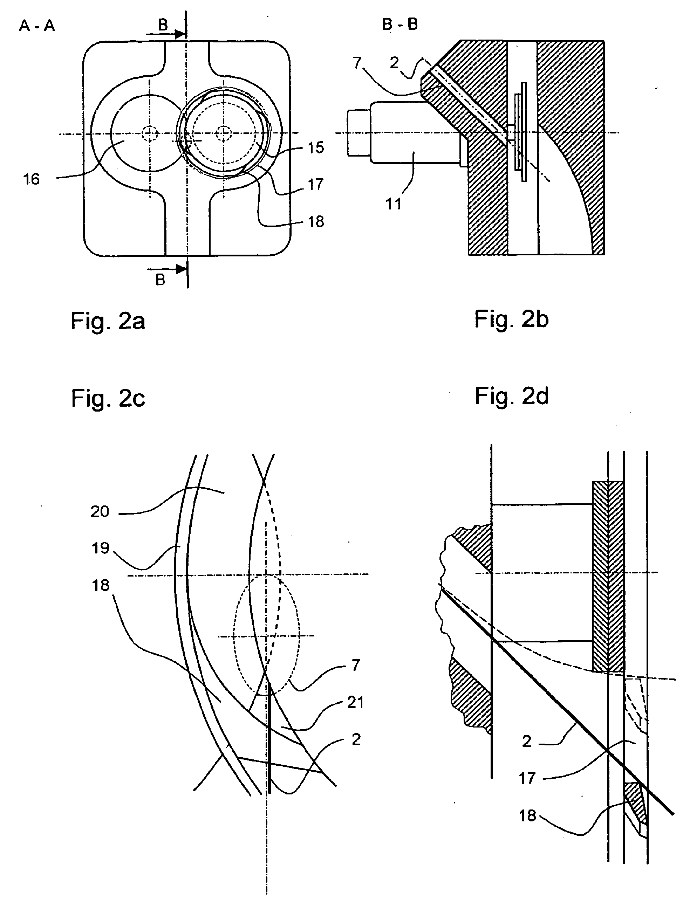

In Figur 2a ist eine Schnittansicht durch die Drahtschneideeinrichtung 3 entlang der Schnittlinie A-A der Figur 1 dargestellt. Die Drahtschneideeinrichtung 3 weist ein erstes Schneidelement 15 und ein zweites Schneidelement 16 auf, die als Scheiben mit kreisförmigem Umfangsrand ausgebildet sind. Das erste und zweite Schneidelement 15, 16 sind vorzugsweise aus einem Keramikmaterial gebildet, das insbesondere an ihren Umfangsrändern eine raue Oberfläche aufweist, um die Mitnahme der Drahtelektrode 2 in den Schneidbereich zu unterstützen. Die Schneidelemente 15, 16 sind drehbar bezüglich der senkrecht zur Zeichenebene der Fig. 2a laufende Drehachsen angebracht, wobei sich die beiden Schneidelemente 15, 16 leicht überlappen. Das Mass der Überlappung ist so gewählt, dass an den Überlappungsgrenzen die Umfangsränder der Schneidelemente 15, 16 einen spitzen Schneidwinkel bilden. Die Drahtelektrode 2 wird durch Scherung an den Kanten der Schneidelemente 15 und 16 durchtrennt.

Bezüglich der Zeichenebene der Figur 2a befindet sich hinter den Schneidelementen 15, 16 der Führungskanal 7, der die Drahtelektrode 2 in die Schneidzone nahe des Überlappungsbereichs der beiden Schneidelemente 15, 16 führt. Dies ist anschaulich aus der Figur 2d zu entnehmen, die eine Detailansicht des Schnittbereichs der Drahtschneideeinrichtung zeigt.

Der Führungskanal 7 führt die Drahtelektrode 2 schräg in Richtung der Schneidzone, ohne dass die Drahtelektrode 2 zu nahe an den Überlappungsbereich gelangt, sodass die Drahtelektrode 2 nicht automatisch durch den Umfangsrand eines der Schneidelemente 15, 16 ergriffen wird und in Richtung des Überlappungsbereichs gezogen und dort zerschnitten wird. Der schräge Führungskanal verhindert auch, dass die Spitze des aus Führungskanal 7 zugeführten Drahtstückes durch Reibung an den Schneidelementen 15, 16 nach oben mitgenommen wird.

Das Hineinbewegen der Drahtelektrode 2 in den Schneidbereich, in dem ein Schneideingriff mit Hilfe der Schneidelemente 15, 16 auf die Drahtelektrode 2 erfolgt, wird mit Hilfe einer Ablenkeinheit 17 durchgeführt. Die Ablenkeinheit 17 lenkt die Drahtelektrode 2 aus der Zuführungsrichtung in der Schneidzone so ab bzw. nimmt diese so mit, dass diese in den Schneidbereich gerät. In der gezeigten Ausführungsform der Fig. 2b ist die Ablenkeinheit 17 scheibenförmig mit einem kreisförmigen Umfangsrand als Mitnehmerscheibe ausgebildet und weist Anschlagskanten 18 auf, z. B. vier Anschlagskanten. Die Ablenkeinheit 17 ist so mit dem ersten Schneidelement 15 gekoppelt, dass sie sich um die gleiche Drehachse, vorzugsweise mit der gleichen Winkelgeschwindigkeit dreht. Insbesondere kann die Ablenkeinheit 17 fest mit dem ersten Schneidelement 15 in Verbindung stehen. Bei der Drehung des ersten Schneidelements 15 greifen so die Anschlagselemente 18 in bestimmten Zeitabständen die durch den Führungskanal 7 vorgeschobene Drahtelektrode 2 und führen diese in den Schneidbereich, sodass die Drahtelektrode 2 zwischen dem ersten und dem zweiten Schneidelement 15, 16 zerschnitten wird. Beim Zerteilen der Drahtelektrode 2 entstehen Drahtstücke, da die Drahtelektrode 2 üblicherweise kontinuierlich durch den Führungskanal 7 bewegt und dadurch ein Drahtstück in die Schneidzone 8 hineinbewegt wird, bevor dieses Drahtstück der Drahtelektrode 2 von einem der Anschlagelemente 18 ergriffen und in den Schneideingriff mit dem ersten und zweiten Schneidelement 15, 16 gebracht wird.

In der hier dargestellten Ausführungsform ist das erste Schneidelement 15 durch die Antriebseinheit 11 angetrieben und das zweite Schneidelement 16 lediglich drehbar gelagert. Dabei liegt das zweite Schneidelement 16 im Überlappungsbereich seitlich an dem ersten Schneidelement 15 an und wird von diesem mitgenommen. Das zweite Schneidelement 16 kann, um stets eine ausreichende Anpressung in dem Überlappungsbereich zu dem ersten Schneidelement 15 zu gewährleisten, z. B. mit Hilfe einer nicht abgebildeten Feder in Achsrichtung gegen das erste Schneidelement 15 gedrückt werden.

In Figur 2c ist in einer vergrösserten Darstellung der Schneidbereich gezeigt, in dem die Drahtelektrode 2 in Stücke zerschnitten wird. Der Überlappungsbereich der Schneidelemente 15, 16 ergibt eine linsenförmige Fläche, in der die beiden Schneideelemente 15, 16 aneinander anliegen. Die Ablenkeinheit 17 ist fest mit dem ersten Schneidelement 15 verbunden und weist die Anschlagselemente 18 auf, die durch einen Aussenring 19 ebenfalls miteinander in Verbindung stehen. Diese bilden einen Durchlass 20 durch die Ablenkeinheit 17, durch den die Drahtelektrode 2 während ihrer Bewegung in Zuführungsrichtung geleitet wird.

Im Betrieb wird die Drahtelektrode 2 durch den Führungskanal 7 geführt und bewegt sich zwischen den beiden Schneidelementen 15, 16 hindurch in den Durchlass 20 der Ablenkeinheit 17. Durch die Drehung des Ablenkelements 17 wird die vorgeschobene Drahtelektrode 2 allseitig umschlossen. Die Drehung der Ablenkeinheit 17 reduziert nun fortschreitend den Querschnitt 21 des zwischen den Schneidelementen 15, 16 und des Anschlagselements der Ablenkeinheit 17 gebildeten keilförmigen Fensters und das Anschlagselement bewegt die vorgeschobene Drahtelektrode 2 in den durch die Schneidelemente 15, 16 gebildeten Schneidbereich. Die Anschlagselemente 18 sind derart gestaltet, dass sie die Drahtelektrode 2 mit einer stetigen Bewegung vorschieben, d.h. Sie können eine Krümmung aufweisen, um die Drahtelektrode 2 zu greifen und bei einer weiteren Drehung der Ablenkeinheit 17 die Drahtelektrode 2 so ablenken, dass keine Stösse auf die Drahtelektrode 2 ausgeübt werden.

Es ist darauf zu achten, dass die vorgeschobene Drahtelektrode 2 keinesfalls von sich aus bzw. in unkontrollierter Weise in den Schneidbereich der Schneidelemente 15, 16 gerät, weil dies zu einer unnötigen Mehrbeanspruchung der bewegten Teile und zu einer erhöhten Stromaufnahme bzw. erhöhtem Verschleiss führen würde. Die Geometrie, die Lage und die Ausrichtung des Führungskanals 7 in dem Schneidgehäuse 9 wird deshalb so gestaltet, dass jede Drahtsorte und jeder Drahtdurchmesser unter Berücksichtigung der Eigensteifigkeit und der Eigenkrümmung in sicherem Abstand von dem Schneidbereich in die Schneidzone 8 gelangen kann.

Beim Betrieb der Funkenerosionsmaschine mit feinen Drahtelektroden wird die Drahtschneideeinrichtung 3 häufig ausgeschaltet. Daher ist sicherzustellen, dass kein Hindernis in der Schneidzone 8 liegt. Hierzu kann der Antrieb 11 der Drahtschneideeinrichtung 3 mit einem Winkeldrehgeber ausgestattet sein. Wird die Drahtschneideeinrichtung 3 nun ausgeschaltet, so kann die Steuerung der Funkenerosionsmaschine den Antrieb 11 so steuern, dass keines der Anschlagselemente 18 vor dem Ausgang des Führungskanals 7 zu stehen kommt

Die Länge der geschnittenen Drahtstücke ist abhängig von der Vorschubsgeschwindigkeit der Drahtelektrode 2, von der Drehzahl der Antriebseinheit 11 und von der Anzahl der Anschlagselemente 18 der Ablenkeinheit 17. Die Drahtschneideeinrichtung 3 und die Drahtabzugeinrichtung 5 können über ein Getriebe gekoppelt sein, sodass die Schnittfrequenz proportional zur Drahtvorschubsgeschwindigkeit ist und somit die geschnittenen Drahtstücke stets die gleiche Länge haben.

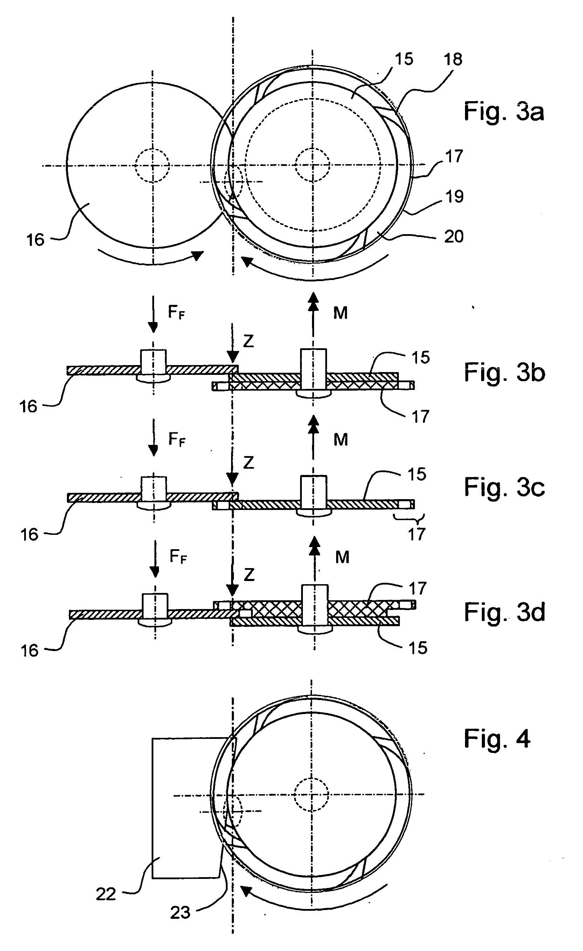

Die Figuren 3a bis 3d zeigen verschiedene Möglichkeiten der Anordnung der zwei Schneidelemente 15, 16 und der Ablenkeinheit 17. In Figur 3a ist nochmals die Anordnung der beiden Schneidelemente 15, 16 und der als Mitnehmerscheibe ausgebildeten Ablenkeinheit 17 dargestellt. Wie in Figur 3b dargestellt ist, befindet sich das zweite Schneidelement 16 bzgl. der Zuführungsrichtung Z der Drahtelektrode 2 vor dem ersten Schneidelement, und die Mitnehmerscheibe 17 ist mit dem ersten Schneidelement 15 gekoppelt und befindet sich in Zuführungsrichtung Z hinter dem ersten Schneidelement 15. Das zweite Schneidelement 16 ist mit einer Federkraft F_{F} beaufschlagt, die das zweite Schneidelement 16 in Zuführungsrichtung Z der Drahtelektrode 2 gegen das erste Schneidelement 15 drückt.

In Figur 3c ist dargestellt, dass das erste Schneidelement 15 und die Ablenkeinheit 17 integriert ausgeführt sind. Dabei sind die Anschlagselemente 18 direkt an dem Umfangsrand des ersten Schneidelementes 15 angebracht und die äusseren Enden der Anschlagselemente 18 mit dem Aussenring 19 miteinander verbunden. Die Durchlässe 20 werden durch den Umfangsrand des ersten Schneidelementes 15, die Anschlagselemente 18 und den Aussenring 19 gebildet.

Figur 3d zeigt eine weitere Ausführungsform der Anordnung der Schneidelemente 15, 16 sowie der Mitnehmerscheibe 17. Bei dieser Ausführungsform ist die Mitnehmerscheibe 17 in Zuführungsrichtung Z noch vor dem zweiten Schneidelement 16 angeordnet und mit dem ersten Schneidelement 15 gekoppelt.

In den gezeigten Ausführungsformen liegt das zweite Schneidelement im Überlappungsbereich an dem ersten Schneidelement 15 an und wird durch dieses bewegt. Es kann auch vorgesehen sein, dass beide Schneidelemente getrennt voneinander, z. B. durch getrennte Antriebseinheiten, bewegt werden.

In den dargestellten Ausführungsformen sind die Schneidelemente 15, 16 als Keramikscheiben ausgebildet, die zum Zerteilen der Drahtelektrode 2 scharfe Kanten an ihren Umfangsrändern aufweisen. Selbstverständlich können die Schneidelemente 15, 16 auch aus einem anderen verschleissfesten Material gefertigt sein.

Im Betrieb kann zur Reduktion der Reibung zwischen den Schneidelementen 15, 16 ein Fluid zur Schneidzone 8 geleitet werden. Dieses Fluid kann über den Strömungskanal 12, über die für den Transport der Drahtelektrode 2 durch den Führungskanal 7 vorgesehene Fluidströmung, aber auch über zusätzliche Fluidleitungen zur Schneidzone 8 geleitet werden, beispielsweise über eine in den Überlappungsbereich gerichtete Fluiddüse .

Bei der in Figur 4 schematisch dargestellten Ausführungsform ist anstelle des scheibenförmigen zweiten Schneidelementes 16 ein Gegenelement 22 vorgesehen, das eine feststehende Schneidkante 23 aufweist. Die Schneidkante 23 des Gegenelementes 22 überlappt das erste Schneidelement 15 und bildet einen Überlappungsbereich, wobei der Umfangsrand des ersten Schneidelements 15 und die Schneidkante 23 einen Schneidbereich bilden. Vorzugsweise sind die Schneidkante 23 des Gegenelements 22 und der Umfangsrand des ersten Schneidelements 15 so zueinander angeordnet, dass sie im Schneidbereich einen spitzen Winkel bilden. Das Gegenelement 22 steht fest mit dem Schneidgehäuse 9 in Verbindung und kann somit nicht durch das rotierende erste Schneidelement 15 bewegt werden. Die in die Schneidzone 8 vorgeschobene Drahtelektrode 2 wird ebenso wie bei den zuvor beschriebenen Ausführungsformen mit Hilfe der Ablenkeinheit 17, z. B. mit Hilfe der Anschlagselemente 18 der Mitnehmerscheibe 17, in den Schneidbereich bewegt, um in Schneideingriff mit dem Schneidelement und dem Gegenelement 22 zu gelangen.

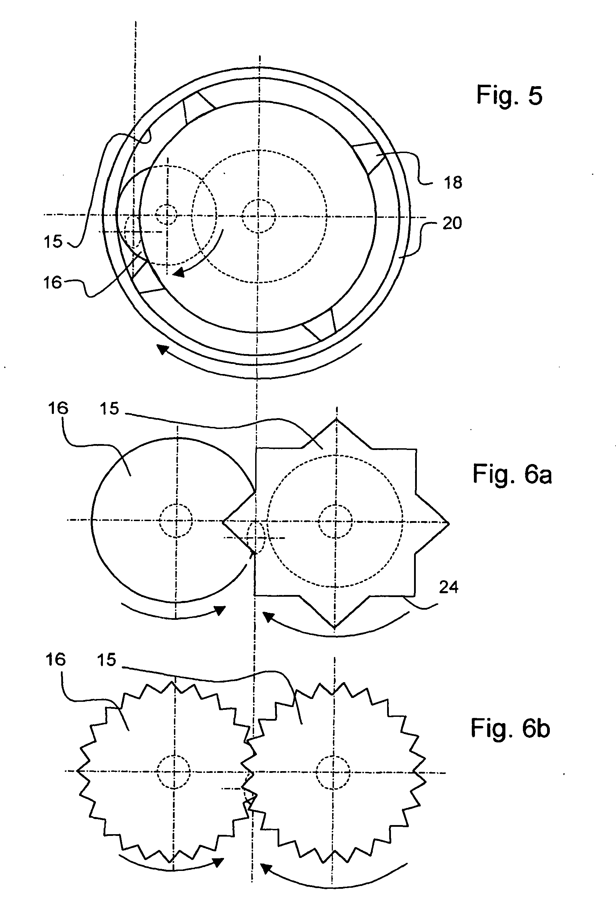

In Figur 5 ist schematisch anhand der Anordnung der Schneidelemente 15, 16 und der Mitnehmerscheibe 17 eine weitere Ausführungsform der erfindungsgemässen Drahtschneideeinrichtung 3 dargestellt. Dort ist das erste Schneidelement 15 lediglich als ein Ring ausgebildet, der auf der Mitnehmerscheibe 17 montiert ist. Die Mitnehmerscheibe 17 weist eine Innenscheibe, die Anschlagse-Iemente 18 und einen Aussenring 20 auf, der die Anschlagselemente 18 miteinander verbindet, um zwischen der Innenscheibe und dem Aussenring Durchlässe zu bilden. Der Aussenring 20 kann dabei als das erste Schneidelement 15 ausgebildet sein oder konzentrisch so mit einem ringförmigen ersten Schneidelement versehen sein, dass der Innendurchmesser des ringförmigen ersten Schneidelements 15 etwas kleiner ist als der Innendurchmesser des Aussenrings 20 der Mitnehmerscheibe 17.

Das zweite Schneidelement 16 wird, in Richtung der Drehachse gesehen, innerhalb des Aussenrings 20 bzw. des ringförmigen ersten Schneidelements 15 so angeordnet, dass der Schnittbereich durch die Umfangskante des zweiten Schneidelements 16 und der Innenkante des ringförmigen ersten Schneidelements 15 gebildet wird. Auch bei dieser Anordnung überlappen sich die Schneidelemente so, dass die Schneidkanten im Schneidbereich einen spitzen Winkel bilden. Vorzugsweise entspricht die Drehrichtung des zweiten Schneidelements 16 der Drehrichtung des ersten Schneidelements 15. Bei dieser Variante ist das Bauvolumen der Drahtschneideeinrichtung 3 kompakter.

In den Figuren 6a, 6b sind weitere Ausführungsformen der erfindungsgemässen Drahtschneideeinrichtung 3 schematisch dargestellt. In diesen Ausführungsformen ist der Umfangsrand der Schneidelemente 15, 16 nicht kreisförmig ausgebildet, sondern weist Zähne oder allgemeine Vorsprünge und Ausnehmungen auf, die gleichzeitig Anschlagskanten der Ablenkeinheit 17 bilden, sodass neben den Schneidelementen 15, 16 keine zusätzliche Ablenkeinheit 17 vorgesehen werden muss. Im gezeigten Beispiel wird die Ablenkeinheit 17 durch die Vorsprünge und Ausnehmungen am Umfangsrand der Schneidelemente 15, 16 gebildet.

Wie in der Figur 6a dargestellt ist, ist das erste Schneidelement mit dreiecksförmigen Vorsprüngen (Zähne 24) an seinem Umfangsrand ausgebildet, während das zweite Schneidelement 16 im Wesentlichen unverändert kreisförmig ist. Die beiden Schneidelemente 15, 16 überlappen sich. Die Zähne 24 bilden Anschlagskanten, die die vorgeschobene Drahtelektrode 2 mitnehmen und in den Schneidbereich, der durch die Aussenkanten des Überlappungsbereichs gebildet wird, ablenken.

Wie in Figur 6b dargestellt ist, können auch beide Schneidelemente 15, 16 mit gezahnten Umfangsrändern versehen sein. Die Anzahl der Zähne und ihre Abstände an dem Umfangsrand der Schneidelemente 15, 16 beeinflussen die Länge der geschnittenen Drahtstücke. Die beiden Schneidelemente 15, 16 sind überlappend angeordnet.

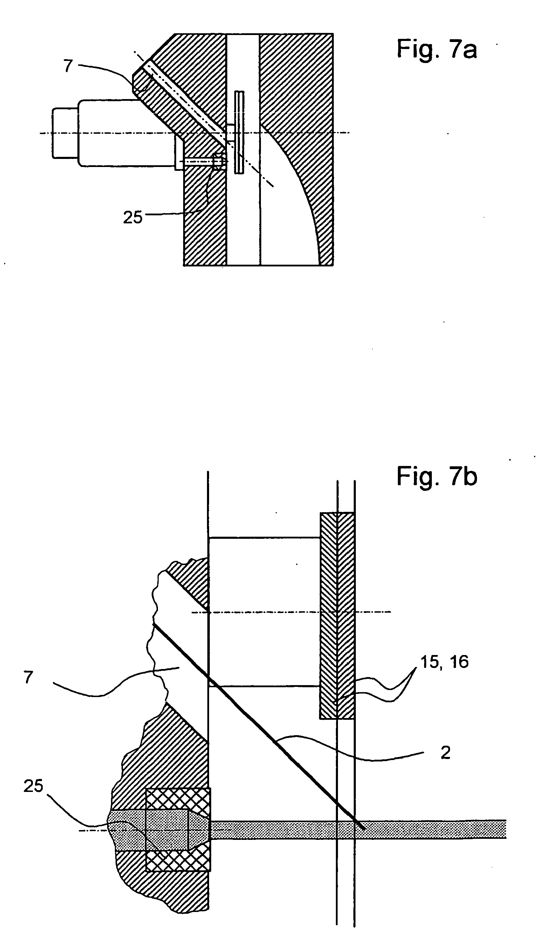

In den Figuren 7a und 7b ist eine Querschnittsdarstellung einer weiteren Ausführungsform der erfindungsgemässen Drahtschneideeinrichtung 3 dargestellt. Die Figur 7a weist wie in vorhergehenden Ausführungsformen gezeigt, zwei Schneidelemente 15, 16 auf, die sich miteinander überlappen, und so einen Schneidbereich für die vorgeschobene Drahtelektrode 2 bilden. Die Ablenkeinheit ist in dieser Ausführungsform jedoch mit Hilfe einer Fluiddüse 25 ausgebildet. Die Fluiddüse 25 wird in zeitlichen Abständen aktiviert, um mit Hilfe eines Fluidstrahls, z. B. einem Wasserstrahl aus deionisiertem Wasser, die Drahtelektrode 2 aus der Zuführungsrichtung Z auszulenken und in den Schneidbereich zu drücken. Durch eine geeignete Ansteuerung der Fluiddüse 25 kann bei Kenntnis der Vorschubsgeschwindigkeit der Drahtelektrode 2 die Länge der abgeschnittenen Drahtstücke genau festgelegt werden. Das Vorsehen der Fluiddüse 25 als Ablenkeinheit hat den Vorteil, dass die Anzahl der sich bewegenden Teile reduziert werden kann und somit die Störanfälligkeit der Drahtschneideeinrichtung 3 reduziert wird. Im Gegensatz zu den oben beschriebenen Ausführungsformen, bei denen die Ablenkung der Drahtelektrode 2 mit Hilfe einen Mitnehmerscheibe 17 bewerkstelligt wird, ist bei dieser Ausführungsform in der Schneidzone 8 nach Ausschalten des Fluidstrahls kein Hindernis vorhanden. Ein Winkeldrehgeber ist bei dieser Ausführungsform nicht erforderlich.

Die Schneidelemente 15, 16, der Zuführungskanal 7 und die Fluiddüse 25 können so zueinander ausgerichtet sein, dass entweder die Fluiddüse 25 die Drahtelektrode 2 bei Aktivierung in den Schneidbereich drückt oder bei einer weiteren Ausführungsform die Drahtelektrode 2 aus dem Schneidbereich herausdrückt, wenn der Zuführungskanal 7 die Drahtelektrode direkt in den Schneidbereich lenkt. So kann durch Abschalten der Fluiddüse 25 die Drahtelektrode 2 in den Schneidbereich geführt werden, während bei aktivierter Fluiddüse 25 die Drahtelektrode 2 in den Schneidbereich gelenkt wird.

Bei einer besonders bevorzugten Ausgestaltung gemäss den Figuren 7a und 7b, ist die Fluiddüse 25 im Wesentlichen ununterbrochen aktiv, sodass ein konstanter Fluidstrahl erzeugt wird. Die durch die Drahtabzugeinrichtung 5 vorgeschobene Drahtelektrode 2 gelangt in den Wirkungsbereich des Fluidstrahls, wodurch die Drahtelektrode 2 in den Schneidbereich gedrückt wird. Die Auslenkung ergibt sich demnach direkt durch den Vorschub der Drahtelektrode 2. Die Länge der abgeschnittenen Drahtstücke ist bei dieser Ausführungsform unabhängig von der Drahtvorschubsgeschwindigkeit. Sie ergibt sich allein aus den geometrischen Verhältnissen in der Drahtschneideeinrichtung und entspricht etwa dem Abstand zwischen dem unteren Schnittpunkt des ersten Schneidelementes 15 mit dem zweiten Schneidelement 16 und dem Schnittpunkt der vorgeschobenen Drahtelektrode mit dem von der Fluiddüse 25 erzeugten Fluidstrahl.

Die Schneidelemente 15, 16 arbeiten über Ihren ganzen Umfang, sodass diese einer gleichmässigen Abnutzung unterliegen und ein zuverlässiges Zerteilen der Drahtelektrode garantieren sowie eine lange Lebensdauer gewähren. Die Antriebseinheit 11 der Drahtschneideeinrichtung 3 kann mit konstanter Drehzahl arbeiten. Die Drahtabzugeinrichtung 5 und die Drahtschneideeinrichtung 3 können einen gemeinsamen Antrieb aufweisen. Der Strömungskanal 12 und Fluiddüse 25 können gemeinsam versorgt werden. Der Aufwand bei der Montage und im Betrieb ist äusserst gering, insbesondere ist keine Justierung für unterschiedliche Drahtsorten und Drahtdurchmesser erforderlich, da die Schneidelemente spielfrei aufeinander liegen. Schliesslich hat vorliegende Ausgestaltung der Drahtschneideeinrichtung 3 den Vorteil, dass sogar im Falle eines Schadens an der Drahtschneideeinrichtung 3 der Betrieb der Funkenerosionsmaschine zumindest über eine gewisse Zeit aufrecht erhalten werden kann.

## Patentansprüche

1. Drahtschneideeinrichtung für eine Funkenerosionsvorrichtung, mit:
einer Drahtabzugeinrichtung (5), die eine Drahtelektrode (2) entlang einer Zuführungsrichtung in eine Schneidzone (8) der Funkenerosionsvorrichtung bewegt, **gekennzeichnet durch** eine Ablenkeinheit (17), die in der Schneidzone (8) die in Zuführungsrichtung (Z) laufende Drahtelektrode (2) aus der Zuführungsrichtung (Z) in einen gegenüber der Zuführungsrichtung versetzt angeordneten Schneidbereich derart ablenkt, dass im Schneidbereich zumindest eine Schneidkante auf die Drahtelektrode (2) einwirkt, um diese zu schneiden.

2. Drahtschneideeinrichtung nach Anspruch 1, **dadurch gekennzeichnet, dass** die Ablenkeinheit (17) ausgestaltet ist, um die in Zuführungsrichtung (Z) laufende Drahtelektrode (2) jeweils nach einem bestimmten Vorschub der Drahtelektrode abzulenken.

3. Drahtschneideeinrichtung nach Anspruch 1 oder 2, **dadurch gekennzeichnet, dass** die Drahtschneideeinrichtung ein um eine Rotationsachse rotierendes erstes Schneidelement (15), deren Umfangsrand zumindest teilweise als erste Schneidkante ausgebildet ist, und ein zweites Schneidelement (16) mit einer zweiten Schneidkante aufweist, um den Schneidbereich zu bilden; und dass die Zuführungsrichtung (Z) der Drahtelektrode (2) quer zu den Schneidkanten und zumindest mit einer Richtungskomponente parallel zur Rotationsachse des ersten Schneidelementes verläuft.

4. Drahtschneideeinrichtung nach Anspruch 3, wobei die erste Schneidkante des ersten Schneidelements und die zweite Schneidkante im Schneidbereich einen spitzen Winkel bilden.

5. Drahtschneideeinrichtung nach einem der Ansprüche 3 und 4, **dadurch gekennzeichnet, dass** das zweite Schneidelement (16) rotierbar ist und wobei die zweite Schneidkante an einem Umfangsrand des zweiten Schneidelements (16) ausgebildet ist.

6. Drahtschneideeinrichtung nach Anspruch 5, **dadurch gekennzeichnet, dass** das zweite Schneidelement (16) gestaltet ist, um in gegenläufiger Drehrichtung zum ersten Schneidelement (15) zu rotieren.

7. Drahtschneideeinrichtung nach Anspruch 6, **dadurch gekennzeichnet, dass** das zweite Schneidelement (16) so mit dem ersten Schneidelement (15) gekoppelt ist, dass sich das zweite Schneidelement (16) aufgrund der Drehung des ersten Schneidelements (15) dreht.

8. Drahtschneideeinrichtung nach Anspruch 7, **dadurch gekennzeichnet, dass** ein Abschnitt des ersten Schneidelementes (15) an einem Abschnitt des zweiten Schneidelementes (16) anliegt, sodass bei einer Drehung des ersten Schneidelements (15) das zweite Schneidelement (16) durch Kraft- und/oder Formschluss mitgenommen wird.

9. Drahtschneideeinrichtung nach einem der Ansprüche 3 bis 8, **dadurch gekennzeichnet, dass** die Ablenkeinheit (17) mindestens ein Anschlagelement (18) aufweist, das so bewegbar ist, dass die Drahtelektrode (2) aus der Zuführungsrichtung (Z).in den Schneidbereich abgelenkt wird.

10. Drahtschneideeinrichtung nach Anspruch 9, **dadurch gekennzeichnet, dass** die Ablenkeinheit (17) mit dem ersten Schneidelement (15) und/oder dem zweiten Schneidelement (16) gekoppelt ist, sodass die in Zuführungsrichtung (Z) bewegte Drahtelektrode (2) zyklisch von dem Anschlagelement (18) erfasst wird und in den Schneidbereich bewegt wird.

11. Drahtschneideeinrichtung nach Anspruch 10, **dadurch gekennzeichnet, dass** die Ablenkeinheit (17) und das erste Schneidelement (15) oder die Ablenkeinheit (17) und das zweite Schneidelement (16) als eine Einheit ausgebildet sind.

12. Drahtschneideeinrichtung nach Anspruch 9 bis 11, **dadurch gekennzeichnet, dass** das Anschlagelement (18) von dem Umfangsrand des ersten und/oder zweiten Schneidelementes (15, 16) hervorsteht.

13. Drahtschneideeinrichtung nach Anspruch 12, **dadurch gekennzeichnet, dass** mehrere Anschlagelemente (18) an dem Umfangsrand des ersten und/oder zweiten Schneidelementes (15, 16) vorgesehen sind, wobei die bezüglich einer Rotationsachse des ersten und/oder zweiten Schneidelementes (15, 16) äussersten Ende der Anschlagelemente (18) miteinander mit einem Aussenring (20) verbunden sind, sodass jeweils zwei benachbarte Anschlagelemente (18), die jeweilige Schneidkante des ersten und/oder zweiten Schneidelementes (15, 16) und der Aussenring (19) einen Durchlass (20) bilden, durch den die Drahtelektrode (2) geführt ist.

14. Drahtschneideeinrichtung nach Anspruch 3 bis 8, **dadurch gekennzeichnet, dass** das erste Schneidelement (15) und/oder das zweite Schneidelement (16) einen Umfangsrand mit einem oder mehreren Vorsprüngen aufweisen, an denen sich die Anschlagskanten befinden.

15. Drahtschneideeinrichtung nach Anspruch 3 oder 4, **dadurch gekennzeichnet, dass** das zweite Schneidelement (16) feststehend ausgebildet ist.

16. Drahtschneideeinrichtung nach Anspruch 3 oder 4, **dadurch gekennzeichnet, dass** die Ablenkeinheit eine Fluiddüse (25) aufweist, die so angeordnet ist, dass abhängig von einem Durchströmen mit einem Fluid die Drahtelektrode (2) in den Schneidbereich gelangt.

17. Drahtlaufsystem mit einer Drahtschneideeinrichtung nach einem der vorstehenden Ansprüche in einem Drahtentsorgungsbereich einer Funkenerosionsvorrichtung.

18. Verfahren zum Zerteilen einer Drahtelektrode (2) in einer Funkenerosionsvorrichtung, bei welchem:
die Drahtelektrode (2) entlang einer Zuführungsrichtung (Z) in eine Schneidzone (8) der Funkenerosionsvorrichtung bewegt wird, **dadurch gekennzeichnet, dass** die in Zuführungsrichtung (Z) laufende Drahtelektrode (2) aus der Zuführungsrichtung (Z) in einen gegenüber der Zuführungsrichtung versetzt angeordneten Schneidbereich derart abgelenkt wird, dass in dem Schneidbereich zumindest eine Schneidkante auf die Drahtelektrode (2) einwirkt, um diese zu zerteilen.

19. Verfahren nach Anspruch 18, wobei die in Zuführungsrichtung (Z) laufende Drahtelektrode (2) jeweils nach einem bestimmten Vorschub der Drahtelektrode (2) aus der Zuführungsrichtung (Z) abgelenkt wird.

## Claims

1. A wire cutting device for an electrical discharge machining (EDM) machine comprising:
a wire draw-off device (5) that moves a wire electrode (2) along a feed direction into a cutting zone (8) of the EDM machine,
**characterised by** a deflection unit (17), which in the cutting zone (8) deflects the wire electrode (2) moving in the feed direction (Z) out of the feed direction (Z) into a cutting area arranged offset relative to the feed direction in such a manner that in the cutting area at least one cutting edge acts upon the wire electrode (2) to cut said wire electrode.

2. A wire cutting device according to claim 1,
**characterised in that** the deflection unit (17) is designed to deflect the wire electrode (2) moving in the feed direction (Z) after a specified advance of the wire electrode.

3. A wire cutting device according to Claim 1 or 2,
**characterised in that** the wire cutting device comprises a first cutting element (15) rotating around an axis of rotation, with a peripheral edge designed at least to some extent as the first cutting edge, and a second cutting element (16) with a second cutting edge, in order to form the cutting area;
**and in that** the feed direction (Z) of the wire electrode (2) runs across the cutting edges and at least with one directional component parallel to the axis of rotation of the first cutting element.

4. A wire cutting device according to Claim 3,
**characterised in that** the first cutting edge of the first cutting element and the second cutting edge form an acute angle in the cutting area.

5. A wire cutting device according to one of Claims 3 and 4,
**characterised in that** the second cutting element (16) is rotatable and the second cutting edge is formed on a peripheral edge of the second cutting element (16) .

6. A wire cutting device according to Claim 5,
**characterised in that** the second cutting element (16) is designed in order to rotate in the opposite direction of rotation to the first cutting element (15).

7. A wire cutting device according to Claim 6,
**characterised in that** the second cutting element (16) is coupled to the first cutting element (15) so that the second cutting element (15) rotates due to rotation of the first cutting element (15).

8. A wire cutting device according to Claim 7,
**characterised in that** a portion of the first cutting element (15) lies against a portion of the second cutting element (16) so that during the rotation of the first cutting element (15) the second cutting element (16) is entrained by force closure and/or form closure.

9. A wire cutting device according to one of Claims 3 to 8,
**characterised in that** the deflection unit (17) comprises/has at least one stop element (18) movable so that the wire electrode (2) is deflected from/out of the feed direction (Z) into the cutting area.

10. A wire cutting device according to Claim 9,
**characterised in that** the deflection unit (17) is coupled to the first cutting element (15) and/or the second cutting element (16) so that the wire electrode (2) moved in the feed direction (Z) is cyclically grasped by the stop element (18) and moved into the cutting area.

11. A wire cutting device according to Claim 10,
**characterised in that** the deflection unit (17) and the first cutting element (15) or the deflection unit (17) and the second cutting element (16) are designed as a unit.

12. A wire cutting device according to Claims 9 to 11,
**characterised in that** the stop element (18) protrudes from the peripheral edge of the first and/or the second cutting element (15, 16).

13. A wire cutting device according to Claim 12,
**characterised in that** several stop elements (18) are provided on the peripheral edge of the first and/or the second cutting element (15, 16), in which, with reference to an axis of rotation of the first and/or second cutting element (15, 16), the outermost ends of the stop elements (18) are connected to each other with an outer ring (20), so that in each case two adjacent stop elements (18), the respective cutting edge of the first and/or second cutting element (15, 16) and the outer ring (19) form a passage (20) through which the wire electrode (2) is guided.

14. A wire cutting device according to Claim 3 to 8,
**characterised in that** the first cutting element (15) and/or the second cutting element (16) comprise a peripheral edge with one or more protrusions on which stop edges are situated.

15. A wire cutting device according to Claim 3 or 4,
**characterised in that** the second cutting element (16) is fixed.

16. A wire cutting device according to Claim 3 or 4,
**characterised in that** the deflection unit comprises a fluid nozzle (25) arranged so that the wire electrode (2) enters the cutting area depending on the through-flow of a fluid.

17. A wire transport system having a wire cutting device according to one of the preceding Claims in a wire disposal area of an EDM machine.

18. A method for cutting a wire electrode (2) in an electrical discharge machine, in which:
the wire electrode (2) is moved along a feed direction (Z) into a cutting zone (8) of the electrical discharge machine,
**characterised in that** the wire electrode (2) moving in the feed direction (Z) is deflected from the feed direction into the cutting area arranged offset relative to the feed direction in such a manner that at least one cutting edge acts on the wire electrode (32) in order to cut it.

19. A method according to Claim 18,
whereby the wire electrode (3) running in the feed direction (Z) is deflected out of the feed direction (Z) after each specific advance of the wire electrode.

## Revendications

1. Dispositif de découpage d'un fil pour un dispositif d'électroérosion comprenant un dispositif de retrait du fil (5) qui déplace un fil-électrode (2) le long d'une direction de guidage vers une zone de coupe (8) du dispositif d'électroérosion, **caractérisé par** une unité de déviation (17) qui dévie dans la zone de coupe (8) le fil-électrode (2) circulant dans la direction de guidage (Z) hors de la direction de guidage (Z) dans une partie de coupe placée de manière décalée par rapport à la direction de guidage de façon à ce que dans la partie de coupe, au moins une arête de coupe agisse sur le fil-électrode (2) pour couper celui-ci.

2. Dispositif de découpage d'un fil selon la revendication 1, **caractérisé en ce que** l'unité de déviation (17) est conçue pour dévier le fil-électrode (2) circulant dans la direction de guidage (Z) respectivement selon une avancée définie du fil-électrode.

3. Dispositif de découpage d'un fil selon la revendication 1 ou 2, **caractérisé en ce que** le dispositif de découpage d'un fil présente un premier élément de coupe (15) tournant sur un axe de rotation dont le bord périphérique est formé au moins partiellement comme première arête de coupe, et un deuxième élément de coupe (16) avec une deuxième arête de coupe, pour former la partie de coupe ; et que la direction de guidage (Z) du fil-électrode (2) est transversale aux arêtes de coupe et comportant au moins une composante directionnelle parallèle à l'axe de rotation du premier élément de coupe.

4. Dispositif de découpage d'un fil selon la revendication 3, dans lequel la première arête de coupe du premier élément de coupe et la deuxième arête de coupe forment un angle aigu dans la partie de coupe.

5. Dispositif de découpage d'un fil selon l'une des revendications 3 et 4, **caractérisé en ce que** le deuxième élément de coupe (16) est rotatif, la deuxième arête de coupe étant formée sur un bord périphérique du deuxième élément de coupe (16) .

6. Dispositif de découpage d'un fil selon la revendication 5, **caractérisé en ce que** le deuxième élément de coupe (16) est conçu pour tourner en sens contraire par rapport au premier élément de coupe (15).

7. Dispositif de découpage d'un fil selon la revendication 6, **caractérisé en ce que** le deuxième élément de coupe (16) est couplé au premier élément de coupe (15) de manière à ce que le deuxième élément de coupe (16) tourne du fait de la rotation du premier élément de coupe (15).

8. Dispositif de découpage d'un fil selon la revendication 7, **caractérisé en ce qu'**une section du premier élément de coupe (15) repose sur une section du deuxième élément de coupe (16), de façon à ce que lorsque le premier élément de coupe (15) tourne, le deuxième élément de coupe (16) est également entraîné par adhérence des forces et/ou complémentarité de forme.

9. Dispositif de découpage d'un fil selon l'une des revendications 3 à 8, **caractérisé en ce que** l'unité de déviation (17) présente au moins un élément de butée (18) qui est mobile de façon à ce que le fil-électrode (2) soit dévié hors de la direction de guidage (Z) vers la partie de coupe.

10. Dispositif de découpage d'un fil selon la revendication 9, **caractérisé en ce que** l'unité de déviation (17) est couplée au premier élément de coupe (15) et/ou au deuxième élément de coupe (16) de façon à ce que le fil-électrode (2) déplacé dans la direction de guidage (Z) soit saisi de manière cyclique par l'élément de butée (18) et déplacé dans la partie de coupe.

11. Dispositif de découpage d'un fil selon la revendication 10, **caractérisé en ce que** l'unité de déviation (17) et le premier élément de coupe (15) ou l'unité de déviation (17) et le deuxième élément de coupe (16) sont formés comme une unité.

12. Dispositif de découpage d'un fil selon les revendications 9 à 11, **caractérisé en ce que** l'élément de butée (18) fait saillie du bord périphérique du premier et/ou du deuxième élément de coupe (15, 16).

13. Dispositif de découpage d'un fil selon la revendication 12, **caractérisé en ce que** plusieurs éléments de butée (18) sont prévus sur le bord périphérique du premier et/ou du deuxième élément de coupe (15, 16), les extrémités des éléments de butée (18) les plus extérieures par rapport à un axe de rotation du premier et/ou du deuxième élément de coupe (15, 16) étant couplées entre elles avec une bague extérieure (20), de façon à ce que respectivement deux éléments de butée (18) voisins, l'arête de coupe respective du premier et/ou du deuxième élément de coupe (15, 16) et la bague extérieure (19) forment un passage (20) à travers lequel le fil-électrode (2) est dirigé.

14. Dispositif de découpage d'un fil selon les revendications 3 à 8, **caractérisé en ce que** le premier élément de coupe (15) et/ou le deuxième élément de coupe (16) présentent un bord périphérique avec une ou plusieurs saillies sur lesquelles se trouvent les arêtes de butée.

15. Dispositif de découpage d'un fil selon la revendication 3 ou 4, **caractérisé en ce que** le deuxième élément de coupe (16) est fixe.

16. Dispositif de découpage d'un fil selon la revendication 3 ou 4, **caractérisé en ce que** l'unité de déviation présente une buse de fluide (25) qui est placée de manière à ce qu'en fonction d'un écoulement avec un fluide, le fil-électrode (2) parvienne dans la partie de coupe.

17. Système de mise sous fil comprenant un dispositif de découpage d'un fil selon l'une des revendications précédentes dans une zone d'évacuation de fil d'un dispositif d'électroérosion.

18. Procédé de fractionnement d'un fil-électrode (2) dans un dispositif d'électroérosion dans lequel :
le fil-électrode (2) est déplacé le long d'une direction de guidage (Z) vers une zone de coupe (8) du dispositif d'électroérosion,
**caractérisé en ce que** le fil-électrode (2) circulant dans la direction de guidage (Z) est ainsi dévié hors de la direction de guidage (Z) vers une partie de coupe placée de manière décalée par rapport à la direction de guidage de façon à ce que dans la partie de coupe, au moins une arête de coupe agisse sur le fil-électrode (2) pour fractionner celui-ci.

19. Procédé selon la revendication 18, dans lequel le fil-électrode (2) circulant dans la direction de guidage (Z) est dévié de la direction de guidage (Z) respectivement selon une avancée définie du fil-électrode (2).
